# EUROPÄISCHE PATENTSCHRIFT

(11) **EP 1 656 028 B1**
(45) Veröffentlichungstag und Bekanntmachung des Hinweises auf die Patenterteilung: **14.02.2007**
(21) Anmeldenummer: 04741348.9
(22) Anmeldetag: 02.08.2004
(51) Int. Cl.: A22C 13/00

(54) **RAUCHDURCHLÄSSIGE GERECKTE NAHTLOSE SCHLAUCHHÜLLE SOWIE DEREN VERWENDUNG ALS NAHRUNGSMITTELHÜLLE**
SMOKE-PERMEABLE, DRAWN, SEAMLESS TUBULAR CASING AND USE THEREOF AS CASING FOR FOODSTUFFS
ENVELOPPE TUBULAIRE ALLONGEE DEPOURVUE DE JOINTURE ET PERMEABLE A LA FUMEE, ET SON UTILISATION EN TANT QU'ENVELOPPE ALIMENTAIRE

(30) Priorität: 12.08.2003 DE 10337010
(43) Veröffentlichungstag der Anmeldung: 17.05.2006
(73) Patentinhaber: CaseTech GmbH & Co. KG, 29656 Walsrode (DE)
(72) Erfinder: TÖBBEN, Wilhelm, 34121 Kassel (DE); HENZE-WETHKAMP, Heinrich, 29664 Walsrode (DE)
(74) Vertreter: Marx, Thiemo Patrick
(86) Internationale Anmeldenummer: PCT/EP2004/008630
(87) Internationale Veröffentlichungsnummer: WO 2005/013701

(56) Entgegenhaltungen:
- EP-A- 0 797 918
- WO-A-02/094023
- US-A- 4 764 406
- US-A1- 2003 055 181

## Beschreibung

Die Erfindung betrifft eine rauchdurchlässige coextrudierte biaxial- oder uniaxial- oder nicht gereckte nahtlose mindestens Einschichthülle die zu einem thermofixierten Schlauch geformt werden kann. Sie wird als Umhüllung von pastösen oder flüssigen Nahrungsmitteln oder auch von Nicht-Nahrungsmitteln verwendet und ist besonders gut geeignet als künstliche Wursthülle mit naturidentischer Haptik und Optik für geräucherte Nahrungsmittel wie beispielsweise Wurst.

Zur Herstellung von geräucherten Nahrungsmitteln im speziellen von Wurstwaren, sind bislang vornehmlich Naturdarm und Hüllen beziehungsweise Schlauchhüllen aus Naturdarm, regenerierter Cellulose oder Kollagen eingesetzt worden. Die Herstellung dieser Produkte ist technisch und finanziell aufwendig und verlangt den Einsatz von Spezialanlagen. Erschwerend kommt hinzu, dass Kollagendarm Bindegewebseiweiß enthält und der Verbraucher Produkte mit tierischen Rohstoffen ersetzen möchte.

Durch die hohe Wasserdampfdurchlässigkeit von Kollagen- und Cellulosehüllen ist ein unerwünschtes austrocknen der Ware nach längerer Lagerzeit zu bemängeln. Alternativ hierzu können Hüllen aus Kunststoffen eingesetzt werden. Schlauchhüllen aus thermoplastischen Kunststoffen sind auf dem Markt weit verbreitet und zeichnen sich durch ihre guten Barriereeigenschaften aus. Leider sind Lebensmittelhüllen mit guter Barriereeigenschaft nicht räucherbar. Aus Savic, Z.: Sausage Casings, VICTUS Lebensmittelindustriebedarf, Wien, Österreich, p. 245-300 und Kohan, Melvin I.: Nylon Plastics Handbook, Carl Hanser Verlag, Munich Vienna New York, 1995, p 151-190 ist bekannt, dass zur Herstellung derartiger Schlauchhüllen das Blasfolien- oder das Double-Bubble-Verfahren eingesetzt werden kann.

Je nach herzustellendem bzw. zu verpackendem Gut müssen allerdings umfangreiche spezifische Anforderungen erfüllt werden, um den Anwendungen in der Praxis gerecht zu werden. Zu diesen anwendungstechnischen Eigenschaftsanforderungen können beispielsweise bei der Wurstherstellung zählen:
- hohe oder geringe Barriereeigenschaften
- Temperaturbeständigkeit bis Sterilisationstemperatur
- gute Haftung zum Füllgut
- gute Weiterreißfestigkeit bei Warmlagerung
- ausreichender Schrumpf
- hohe Festigkeit, Formstabilität, Prallheit
- gutes Schälverhalten, leichte Schälbarkeit
- gutes Heiß und Kaltanschnittverhalten
- leichte Konfektionierbarkeit, insbesondere Raffbarkeit und
- gute Stippbarkeit insbesondere Kalt- und Heißstippbarkeit
- gute Einfärbbarkeit und Farbdeckung
- gute Bedruckbarkeit und sichere Druckfarbenhaftung
- Unbedenklichkeit laut Lebensmittelrecht (Richtlinien EG, Bundesamt für gesundheitlichen Verbraucherschutz und Veterinärmedizin BGVV, Food and Drug Administration FDA)
- Ökologische Unbedenklichkeit der verwendeten Materialien.

Zusätzlich wird immer häufiger eine naturidentische Haptik und ein optisch ansprechendes Aussehen wie dies bei Collagen-, Cellulose- und Faserdärmen bereits bekannt ist verlangt.

Aus der EP-A 139 888 ist bekannt, dass durch den Einsatz von aliphatischem Polyamid eine erhöhte Wasseraufnahme von mindestens 5 Gewichtsprozent möglich ist, so dass in Gegenwart von Wasser oder Wasserdampf ein Rauchübergang auf die Wurst möglich ist. Die Beispielprodukte zeigten nur einen unzureichenden Rauchübergang mittels einer klimageregelten Räucherkammer.

Aus der EP-A 0 920 808 ist eine Einschichtschlauchhülle bekannt, die durch den Einsatz von Cellulose Acetat Propionat als Matrixmaterial einen merklicher Rauchgeschmack gewährleisten soll. Es wird weiter die Möglichkeit beschrieben, dass dem Cellulose Acetat Propionat ein Polyamid und/oder ein Cellulose-Pulver zugemischt werden kann. Die Verarbeitung dieses Gemisches ist kritisch, da sich das Cellulose-Pulver thermisch zersetzen kann. Bei der Herstellung einer solchen Schlauchhülle ist die Einstellung der richtigen. Verfahrensparameter wie beispielsweise Schneckendrehzahl und Heizbandtemperatur schwierig und als entsprechend kritisch ist die Herstellung zu beurteilen. So kann beispielsweise eine Durchsatzerhöhung durch eine Erhöhung der Schneckendrehzahl aufgrund verstärkter Dissipation zu unerwünschten Temperaturspitzen und damit zu einer thermischen Schädigung des Cellulose-Pulvers führen. Eine praxisübliche Veränderung der Verfahrensparameter ist folglich nicht gewährleistet. Weiter ist durch den Einsatz von Cellulose-Acetat-Propionat als Matrixmaterial das Verarbeitungsverhalten dieser Wursthülle problematisch, da sich dieses Material durch ein schlechtes Verstreckverhalten auszeichnet. So ist aus EP-A 0 929 808 zu entnehmen, dass an der Beispielhülle einen maximalen Reckgrad von 2 in Längs- und Querrichtung erzielt werden konnte. Bereits Savic, Z.: Sausage Casings, VICTUS Lebensmittelindustriebedarf, Wien, Österreich, p. 267-277 beschreibt die Notwendigkeit eines hohen Verstreckverhältnisses zur Verbesserung der mechanischen und optischen Eigenschaften der Schlauchhülle. Eine gering gereckte Schlauchhülle muss aufgrund geringer mechanischer Festigkeit eine größere Wandstärke besitzen als eine hochverstreckte. Eine große Wandstärke der Hülle zieht jedoch eine hohe Barrierewirkung mit sich, so dass das Ziel einer hohen Wasserdampfdurchlässigkeit mit einem geringen Flächenreckgrad nicht optimal realisiert werden kann. Ein geringer Flächenreckgrad führt weiter dazu, dass gewünschte mechanische Eigenschaften wie Zylindrizität der Hülle, Weiterreißfestigkeit und pralle Optik durch die Reckparameter nicht verbrauchergerecht eingestellt werden können. So kann festgestellt werden, dass das Weiterreißverhalten aufgrund der Wandstärke und der Materialwahl schlecht ist und derartige Hüllen zur Faltenbildung neigen, so dass ein unsympathische Optik entsteht. Ergänzend kann festgestellt werden, dass der Einsatz eines Cellulose-Pulvers mit der beschriebenen engen Korngrößenverteilung von 90 % zwischen 50-400 µm zu einer unnatürlich einheitlich strukturierten Oberfläche führt. Abschließend muss festgehalten werden, dass das gesetzte Erfindungsziel des Patentes EP-A 0 920 808 eine rauchdurchlässige Kunststoffhülle zu entwickeln, die einen Faserdarm substituieren kann, nicht erreicht worden ist.

Aus der WO 02/078455 und WO 99/07227 ist bekannt, dass durch den Einsatz von fein dispergierten hydrophilen Materialien (Tropfendurchmesser von 0,1 - 3 µm) wie Vinylalkohol, Vinylpyrrolidon oder Vinylalkoholester die Wasserdampfdurchlässigkeit durch das Ausspülen dieser wasserlöslichen Materialien aus der Hülle während dem Wässern erhöht werden kann. Durch die Zugabe von anorganischen Salzen als hydrophiles Material können zusätzlich Vakuolen beim Verstrecken der Hülle erzeugt werden, so dass eine gesteigerte Wasserdurchlässigkeit gegeben ist. Die so hergestellten rauchdurchlässigen Hüllen haben den Nachteil, dass die Formstabilität des Endproduktes nur schwierig zu erreichen ist und dass durch die Fehlstellen in der Hülle ein starker Wasserverlust bei Lagerung vorhanden ist. Weiter ist die Herstellung eines solchen Gemisches problematisch und bedarf bei der verlangten Dispergiergüte eine verfahrenstechnisch aufwendige und kostenintensive Vorgehensweise. Die optischen und haptischen Eigenschaften wirken künstlich und damit weniger ansprechend auf den Betrachter.

Auch die WO 02094023 basiert auf der Einbindung von Blasen durch einen Blasenbildner. Auch hier ist ein erhöhter Wasserverlust während der Lagerung und eine kritisch Prozessführung zu vermuten. Durch die Vakuolen im Darm ist mit einer mechanischen Schwächung zu rechnen, so dass die Befüllung dieser Schlauchhüllen sehr behutsam und folglich nicht praxisgerecht vorgenommen werden muss. Die vom Konsumenten geforderten mechanischen/Eigenschaften wie beispielsweise Faltenfreiheit, Stippfähigkeit, Weiterreißfestigkeit und Zylindrizität können nur ungenügend erfüllt werden.

Der Kunde verlangt zunehmend räucherbare Kunststoffhüllen die einen guten Kompromiss aus Wasserverlust bei Lagerung und Rauchgeschmack darstellen und dennoch allen anwendungstechnischen Anforderungen insbesondere den mechanischen, haptischen und optischen Ansprüchen des Verbrauchers gerecht werden. Es bestand damit die Aufgabe, eine Schlauchhülle zu entwickeln, die eine sehr gute Rauchdurchlässigkeit aufweist, ohne dass bei langer Lagerung ein kritischer Gewichtsverlust eintritt. Weiter sollte mit dieser Hülle eine Räucherung unter den bei der Brühwurst üblichen Bedingungen wie beispielsweise Heißräucherung möglich sein. Die Produktion sollte zudem unkritisch und kostengünstig sein, so dass ein mechanisch, haptisch und optisch ansprechendes und dennoch wirtschaftliches Produkt gefertigt werden kann.

Gelöst wurde diese Aufgabe, durch die Entwicklung einer coextrudierten biaxial- oder uniaxial- oder nicht gereckte nahtlosen mindestens Einschichthülle, die zu einem thermofixierten Schlauch geformt wurde, auf der Basis eines Polyamid-Naturfaser-Gemisches mit Faserlängen zwischen 5 bis 10.000 µm. Denkbar ist auch der Einsatz von Naturfaserfäden, -bändchen oder netzen. Die Herstellung dieser Schlauchhülle kann über die an sich bekannten Blasfolien- oder Double-Boubble-Verfahren vorgenommen werden. Denkbar ist auch die Verarbeitung durch andere Verfahren wie dem Flachfolien-, Spritzgieß- oder Rotationsverfahren. Die Verarbeitung dieses Gemisches ist sowohl auf Doppelschneckenextrudern als auch auf Einschneckenextrudern mit oder ohne Entgasungszone möglich. Bevorzugt ist der Einsatz auf Einschneckenextrudern mit Nutbuchsenzylinder mit oder ohne Entgasungszone, die besonders häufig für die Schlauchhüllenherstellung benutzt werden, da aufgrund kurzen Verweilzeit und niedrigen mittleren Massetemperatur die Verarbeitung unkritisch ist.

Gegenstand der Erfindung ist daher eine mindestens einschichtige rauchdurchlässige Schlauchhülle, dadurch gekennzeichnet, dass mindestens eine Schicht der nahtlosen Schlauchhülle ein Gemisch aus Polyamid und Naturfasern und gegebenenfalls Additive enthält, wobei die Summe der Schichtdicken zwischen 5 und 200 *µ*m liegt und die Wasserdampfdurchlässigkeit der Hülle nach ASTM F1249-01 bei einer Temperatur von 23°C und einer relativen Luftfeuchte von 85 % wenigstens 25 cm³/(m² x Tag x bar) beträgt.
- Die erfindungsgemäße nahtlose Schlauchhülle kann einen Ein- oder Mehrschichtaufbau aufweisen.
- Bevorzugt enthält mindestens eine Schicht der Hülle ein Gemisch aus Naturfasern (Faserlänge von 5-10000 *µ*m) und einem Gemisch aus aliphatischem Polyamid aus der Gruppe PA6, PA11, PA12, PA66, PA6.8, PA6.9, PA6.10, PA6.11, PA6.12, mit einem Copolymer aus den darin enthaltenen Monomereinheiten oder einer Mischung der genannten aliphatischen Polyamide besteht.
- Besonders bevorzugt enthält mindestens eine Schicht der Schlauchhülle 30 Gew.-% bis 99,9 Gew.- % eines aliphatischen Polyamids und/oder Copolyamids und/oder einer Mischung aus denselben und/oder (teil-)aromatischen PA und/oder olefinischen (Co-)Polymer (wie z.B. EVA, EVOH, Ionomerharz) und/oder (Co-)Polyester und 0,1 Gew.-% - 70 Gew.-% Fasern bezogen auf das Gesamtgewicht des Polymergemisches dieser Schicht.
- Bevorzugt ist der eingemischte Faseranteil eine Mischung aus verschiedenen Typen und/oder Längen, wobei besonders bevorzugt eine Cellulosefaseranteil eine bimodalen Mischung verschieden langer Fasern des selben oder unterschiedlichen Typs besteht.
- Üblicherweise liegt die Summe der Schichtdicken zwischen 5 und 100 *µ*m, bevorzugt bei 20-50 *µ*m und besonders bevorzugt bei 20-30 *µ*m.
- Bevorzugt sind die Naturfasern Cellulosefasern, die mittels eines Compound, Masterbatch oder durch direkte Einmischung verarbeitet werden können.
- Üblicherweise beträgt die Wasserdampfdurchlässigkeit der Hülle nach ASTM F1249-01 bei einer Temperatur von 23°C und einer relativen Luftfeuchte von 85 % wenigstens 25 cm³/(m² × Tag × bar) beträgt.

Gegenstand der Erfindung ist das Verfahren zur Herstellung einer solchen schlauchförmigen, biaxial verstreckten rauchdurchlässigen Lebensmittelhülle.

Die Herstellung der erfindungsgemäßen Schlauchhülle geschieht zweckmäßig über ein Extrusionsverfahren. Der in Faser-, Granulat- oder Pulverform vorliegende Rohstoff wird in einem Extruder komprimiert, aufgeschmolzen, homogenisiert und über eine Düse ausgetragen und zu einem nahtlosen Schlauch geformt. Der austretende Primärschlauch wird mittels Luft- oder Wasserkühlung abgekühlt und anschließend simultan biaxial verstreckt. Ein besonders geeignetes Verfahren ist dabei das simultane biaxiale Recken mittels Double-Bubble-Technologie, bei der die Verstreckung der Primärblase über einen anliegenden. Innendruck erfolgt. Zur gezielten Einstellung der Schrumpfeigenschaften kann die Hülle anschließend einer Wärmebehandlung unterzogen werden. Durch Zugabe von Farbpigmenten kann die nahtlose Schlauchhülle nach Bedarf eingefärbt werden, wobei ein mehrschichtiger Aufbau den besonderen Vorteil besitzt ein oder mehrere Schichten einzufärben, so dass eine besonders gute Farbintensität, Farbtreue und Farbdeckung erzielt werden kann.

Es ist bekannt, dass bei der Verarbeitung von Naturfasern zu einer thermische und mechanische Schädigung kommen kann. Eine thermische Schädigung macht sich durch Inhomogenitäten wie z.B. in Form von Stippen und/oder Verbrennern bemerkbar. Eine mechanische Schädigung ist durch eine unerwünschte Reduzierung der Faserlänge und Faserdurchmesser sowie deren Verteilung erkennbar. Überraschenderweise konnte die Naturfaser ohne signifikante thermische Schädigung in die Polyamid-Matrix eingemischt werden. Durch eine geeignete Prozessführung konnte hierbei gleichzeitig die mechanische Schädigung der Fasern nach Bedarf eingestellt werden. Es war weiter überraschend, dass die haptischen und optischen Eigenschaften der erzeugten nahtlosen Schlauchhülle denen eines Natur-, Cellulosefaser- oder Collagendarmes bei wirtschaftlicherer Herstellung ähnelten. Erstaunlicherweise war das mechanische Verhalten der Schlauchhülle sehr gut. So konnte der Schlauch gestippt und gerafft werden, ohne beim anschließenden Brühen aufzuplatzen oder weiterzureißen. Die Barriereeigenschaften wie beispielsweise Wasserdampf- und Sauerstoffdurchlässigkeit können über den Faseranteil angepasst werden, so dass auch der Einsatz in Schlauchhüllen mit hoher Barrierewirkung und natürlichem Erscheinungsbild denkbar ist. Eine Sauerstoffbarriere verhindert bei Lagerung bekanntermaßen eine negative Änderung wie z.B. frühzeitige Vergrauung das der Schlauchhülleninnenseite zugekehrten Brätes. Die Wasserdampfbarriere behindert bei Lagerung bekanntermaßen den durch Verdunsten von Wasser aus dem Füllgut induzierten Gewichtsverlust der Verkaufsware, der einerseits den Erlös des Produktes reduziert und anderseits infolge von Völumenschwindung zu faltigen unansehnlichen Produkten führen kann.

Die nahtlose Schlauchhülle enthält bevorzugt mindestens eine Schicht aus einem Polyamid und Cellulosefasern. Das Polyamid besteht als Hauptkomponente entweder aus einem aliphatischen Homopolyamid oder einem aliphatischen Copolyamid oder einem Blend aus aliphatischem Homo- und Copolyamid oder einem Blend aus aliphatischem Homo- oder Copolyamid und einem teilaromatischen Polyamid. Als aliphatische Homo- und Copolyamide eignen sich solche Polyamide, wie sie in allgemeiner Weise im Kunststoffhandbuch Teil 3/4 "Polyamide" Seite 22 ff, Carl Hanser Verlag München Wien 1998 beschrieben sind. Das aliphatische Polyamid ist ein Homopolyamid aus aliphatischen primären Diaminen und aliphatischen Dicarbonsäuren oder ein Homopolymerisat von ω-Amino-carbonsäuren oder deren Lactamen. Das aliphatische Copolyamid enthält die gleichen Einheiten und ist z. B. ein Polymer auf Basis eines oder mehrerer aliphatischer Diamine und einer oder mehrerer Dicarbonsäuren und/oder einer oder verschiedener ω-Aminocarbonsäuren oder deren Lactamen. Die aliphatischen primären Diamine enthalten insbesondere 4 bis 8 C-Atome. Geeignete Diamine sind Tetra-, Penta-, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäure bzw. deren Lactame enthalten 6 bis 12 C-Atome. Ein Beispiel für ω-Aminocarbonsäuren ist die 11-Aminoundecansäure. Beispiele für Lactame sind ε-Caprolactam und ω-Laurinlactam. Besonders bevorzugte aliphatische Polyamide sind Polycaprolactam (PA 6) und Polyhexamethylenadipinamid (PA66). Ein besonders bevorzugtes aliphatisches Copolyamid ist PA 6/66, das aus Caprolactam-, Hexamethylendiamin- und Adipinsäureeinheiten besteht. Teilaromatische Polyamide werden im Kunststoffhandbuch Teil 3/4 "Polyamide" Seite 803 ff Carl Hanser Verlag München Wien 1998 beschrieben.

Bei den teilaromatischen Polyamiden und Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureienheiten überwiegend oder ausschließlich die aromatischen Einheiten bilden. Beispiele für die erste Ausführungsform sind teilaromatische Polyamide oder Copolyamide, bei denen die aromatischen Diamineinheiten aus m-Xylylendiamin und Phenylendiamin bestehen. Die aliphatischen Dicarbonsäureeinheiten dieser Ausführungsform enthalten gewöhnlich 4 bis 10 C-Atome, wie z.B. Adipinsäure, Sebazinsäure und Azelainsäure.

Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA-MXD6) wird z.B. von der Firma Mitsubishi Gas Chemical Company Inc. unter dem Namen MX-Nylon vertrieben. Beispiele für diese zweite Ausführungsform sind teilaromatische Polyamide und Copolyamide, bei denen die aliphatischen Diamine gewöhnlich 4 bis 8 C-Atome enthalten. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamineinheiten und aliphatische Dicarbonsäureeinheiten in Mengen von jeweils bis zu 5 Mol-% enthalten sein.

Die nahtlose Schlauchhülle kann unverstreckt, uniaxial oder biaxial verstreckt sein. Bevorzugt ist die Hülle biaxial mit einem Flächenreckgrad von 4-10 und besonders bevorzugt von 6-10 verstreckt. Durch die Thermofixierung kann der Grad des Rückschrumpfes eingestellt werden, wobei bevorzugt ein Schrumpf bei 100°C im Wasserbad von 0-30 % und besonders bevorzugt ein Schrumpf von 10-20 % eingestellt wird.

Die eingemischten Naturfasern können Fasern auf Basis von Polysacchariden wie z.B. Cellulosefasern aus Pflanzen wie z.B. Hanf, Jute, Leinen, Bambus, Kokosnuss, Holz oder auch Cellulosefasern aus Regeneratcellulose nach dem Viskose- oder Lyocellverfahren oder natürlichen Mineralfasern wie Kohlenstofffasern sein. Bevorzugt wird eine Cellulosefaser eines Laubholzes, Weichholzes oder Nadelholzes mit einer Länge von 5-10000 *µ*m bevorzugt mit einem 95 % Anteil mit der Länge 5-35 *µ*m und/oder 35-350 *µ*m und/oder 350-10000 *µ*m, besonders bevorzugt mit der Länge 5-35 µm und/oder 350-10000 µm bei einem Durchmesser von 2-30µm eingesetzt. Die Fasern können auch als Mischung daraus, besonders bevorzugt als bimodale Mischung daraus eingesetzt werden. Die Schüttdichte solcher Cellulosefasern schwankt je nach Faserlänge und Typ zwischen 20-600g/l. Die Fasern können thermisch und/oder physikalisch und/oder chemisch vorbehandelt sein.

Die eingemischte Menge der Fasern in der Schicht beträgt zwischen 0,1-70 % bevorzugt zwischen 0,1-10 % und besonders bevorzugt zwischen 0,1-7 % Gewichtsprozent. Die eingemischte Fasermenge kann aus verschiedenen Fasertypen und/oder Faserlängen bestehen, besonders bevorzugt ist ein Gemisch aus verschieden Fasertypen und/oder Faserlängen.

Die Naturfasern können mittels eines Compounds oder Masterbatches auf der Basis eines aliphatischem Polyamid wie PA6, PA11, PA12, PA66, PA6/66, PA6.8, PA6.9, PA6.10, PA6.11, PA6.12 und/oder anderen Thermoplasten oder durch direkte Einmischung verarbeitet werden. Bevorzugt wird ein Compound oder Masterbatch auf der Basis eines niedrigschmelzenden Polyamids wie PA6/66 und/oder PA12. Die Schichten der Hülle können Additive wie Gleitmittel, Antiblockmittel, Nukleirungsmittel, Füllstoffe und Farbpigmente beinhalten oder ein Gemisch aus diesen. Weiter können die Schichten der Hülle hydrophile Materialien wie Vinylpyrrolidon, Vinylalkohol, Alkyloxazoline, Alkylen Glykol, Acrylamid, Alkylenoxid, Acrylsäure, Metaacrylsäure, Maleinanhydrid, Vinylalkoholether, Vinylalkoholester, Celluloseether, Polylactid (PLA), Polyphosphazene, Polysiloxane enthalten.

Das Masterbatch und/oder Compound kann als Granulat oder als Pulver hergestellt sein. Bevorzugt wird die Granulatform, die kugelförmig oder zylindrisch sein kann. Besonders bevorzugt wird ein zylindrisches Granulat zwischen 2-7 mm Länge und 1-4 mm Durchmesser mit porösem Charakter der durch eine spezielle Herstellung realisiert werden kann und zu einer reduzierten Scherkraft in der glatten und genuteten Feststoffzone des Extruders führt. Das Masterbatch und/oder Compound kann gegebenenfalls vorgetrocknet werden.

Die Herstellung der Hülle kann mit Hilfe des Blasfolien- oder Double-Boubble-Verfahren hergestellt werden, wobei ein Doppel- oder Einschneckenextruder verwendet werden kann. Bevorzugt wird das Double-Boubble-Verfahren.

Ein weiterer Gegenstand der Erfindung ist die Verwendung der erfindungsgemäßen nahtlose Schlauchhülle als Umhüllungsmaterial für pastöse oder flüssige Füllgüter. Der besondere Vorteil einer nahtlosen Schlauchhülle besteht darin, dass ein kontinuierliches, spiralförmiges Schälen der Wurst möglich ist ohne durch Störstellen wie beispielsweise eine Verbindungsnaht eingeschränkt zu sein. Zusätzlich ist der optische und haptische Eindruck und die mechanische Integrität bei der Herstellung beispielsweise von Wurst der nahtlosen Schlauchhülle excellent ohne durch eine Naht beeinträchtigt zu werden. Bevorzugt wird sie dabei als Wursthülle für Wurstbrät eingesetzt, welches zudem noch einer Räucherung unterzogen wird. Beispiele für geräucherte Wurstarten sind Kochwürste wie Leberwurst und Blutwurst, Brühwürste wie Jagdwurst, Bierwurst, Schinkenwurst und Kochschinken, Rohwurst wie Salami oder auch weitere Lebensmittel wie Käse.

In folgenden Beispielen sollen die Vorteile der erfindungsgemäßen Schlauchfolie deutlich gemacht werden.

### Vergleichsbeispiel 1

Ein reines PA6/66 (Viskositätszahl=195, Schmelzpunkt=196°C, Folientyp) wurde auf einem Einschneckentextruder zu einer thermisch und mechanisch homogenen Schmelze verarbeitet und durch eine Ringdüse extrudiert und zu einem Schlauch geformt. Der Schlauch wurde nach der Formgebung schnell abgekühlt, so dass eine mittlere Wanddicke von 60 µm erhalten blieb. Es handelt sich um einen geringfügig biaxial gereckten Kunststoffschlauch.

### Vergleichsbeispiel 2

Eine mehrschichtige nahtlose Schlauchhülle bestehend aus 3 Schichten
1. 93 % PA 6 (Viskositätszahl=225, Folientyp) und 7 % Antiblockmasterbatch mit einer Schichtdicke von 5 µm (Innenschicht)
2. 100 % PA6/66 (Viskositätszahl=195, Schmelzpunkt=196°C, Folientyp) mit einer Schichtdicke von 20 µm (Mittelschicht)
3. 100 % PA6/66 (Viskositätszahl=195, Schmelzpunkt=196°C, Folientyp) mit einer Schichtdicke von 5 µm (Außenschicht)
wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm.

### Beispiel 1

Ein Gemisch 95 % PA6/66 (Viskositätszahl=195, Schmelzpunkt=196°C, Folientyp) und 5% Cellulosefasern (Laubholz-Cellulose mit ⌀L=23 µm und ⌀D=17 µm) wurden in einem Extruder zu einem Compound verarbeitet und anschließend auf einem Einschneckentextruder zu einer homogenen Schmelze verarbeitet und durch eine Ringdüse extrudiert und zu einem nahtlosen Schlauch geformt. Der Schlauch wurde nach der Formgebung zu einer nahtlosen Schlauchhülle schnell abgekühlt, so dass eine mittlere Wanddicke von 60 µm erhalten blieb. Es handelt sich um einen geringfügig biaxial gereckten Kunststoffschlauch.

### Beispiel 2

Ein Gemisch 95 % PA6/66 (Viskositätszahl=195, Schmelzpunkt=196°C, Folientyp) und 5 % mikrokristalline Cellulose mit ⌀L=25 *µ*m und ⌀D=17 *µ*m wurden in einem Extruder zu einem Compound verarbeitet und anschließend auf einem Einschneckentextruder zu einer homogenen Schmelze verarbeitet und durch eine Ringdüse extrudiert und zu einem Schlauch geformt. Der Schlauch wurde nach der Formgebung schnell abgekühlt, so dass eine mittlere Wanddicke von 60 µm erhalten blieb. Es handelt sich um einen geringfügig biaxial gereckten Kunststoffschlauch.

### Beispiel 3

Eine mehrschichtige nahtlose Schlauchhülle bestehend aus 3 Schichten
1. 93 % PA6 (Viskositätszahl=225, Folientyp) und 7 % Antiblockmasterbatch mit einer Schichtdicke von 5 µm (Innenschicht)
2. 99 % PA6/66 (Viskositätszahl=195, Schmelzpunkt=196°C, Folientyp) und 1 % Cellulosefasem (0,5 % Laubholz-Cellulose mit ⌀L=60 µm und ⌀D=20 *µ*m und 0,5 % Laubholz-Cellulose mit ⌀L=23 µm und ⌀D=17 µm) mit einer Schichtdicke von 20 µm. (Mittelschicht)
3. 100 % PA6/66 (Viskositätszahl=195, Schmelzpunkt=196°C, Folientyp) mit einer Schichtdicke von 5 µm (Außenschicht)
wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm

### Beispiel 4

Eine mehrschichtige nahtlose Schlauchhülle bestehend aus 3 Schichten
1. 93 % PA 6 (Viskositätszahl=225, Folientyp) und 7 % Antiblockmasterbatch mit einer Schichtdicke von 5 µm (Innenschicht)
2. 99 % PA6/66 (Viskositätszahl=195, Schmelzpunkt=196°C, Folientyp) und 1 % Cellulosefasem (0,5 % Laubholz-Cellulose mit ⌀L=60 µm und ⌀D=20 µm und 0,5 % Laubholz-Cellulose mit ⌀L=23 µm und ⌀D=17 µm) mit einer Schichtdicke von 20 µm (Mittelschicht)
3. 100 % PA6/66 (Viskositätszahl=195, Schmelzpunkt=196°C, Folientyp) und 1 % Cellulosefasern (⌀D=20 µm und 1,5 % Laubholz-Cellulose mit ⌀L=23 µm und ⌀D=17 µm) mit einer Schichtdicke von 5 µm (Außenschicht)
wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm

### Beispiel 5

Eine mehrschichtige nahtlose Schlauchhülle bestehend aus 3 Schichten
1. 97 % PA 6 (Viskositätszahl=225, Folientyp) und 3 % Antiblockmasterbatch mit einer Schichtdicke von 6 µm (Innenschicht)
2. 97 % PA6/66 (Viskositätszahl=195, Schmelzpunkt=196°C, Folientyp) und 3 % Cellulosefasern (1,5 % Laubholz-Cellulose mit ⌀L=60 µm und ⌀D=20 µm und 1,5 % Laubholz-Cellulose mit ⌀L=23 µm und ⌀D=17 µm) mit einer Schichtdicke von 20 µm (Mittelschicht)
3. 100 % PA6/66 (Viskositätszahl=195, Schmelzpunkt=196°C, Folientyp) mit einer Schichtdicke von 5 µm (Außenschicht)
wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm.

### Beispiel 6

Eine mehrschichtige nahtlose Schlauchhülle bestehend aus 5 Schichten
1. 93 % PA6 (Viskositätszahl=225, Folientyp) und 7 % Antiblockmasterbatch mit einer Schichtdicke von 6 µm (Innenschicht)
2. 98 % PA6/66 (Viskositätszahl=195, Schmelzpunkt=196°C, Folientyp) und 2 % Cellulosefasern (Cellulosefasern (1 % Laubholz-Cellulose mit ⌀L=60*µ*m und ⌀D=20 µm und 1 % Laubholz-Cellulose mit ⌀L=23 µm und ⌀D=17 µm) mit einer Schichtdicke von 5 µm (Schicht zwischen Innen- und Mittelschicht)
3. 100 % PA6 (Viskositätszahl=225, Folientyp) mit einer Schichtdicke von 5 µm (Mittelschicht)
4. 100 % PA6/66 (Viskositätszahl=195, Schmelzpunkt=196°C, Folientyp) mit einer Schichtdicke von 20 µm (Schicht zwischen Mittel- und Außenschicht)
5. 97 % PA6/66 (Viskositätszahl=195, Schmelzpunkt=196°C, Folientyp) und 3 % Cellulosefasern (1,5 % Laubholz-Cellulose mit ⌀L=60 µm und ⌀D=20 µm und 1,5.% Laubholz-Cellulose mit ⌀L=23 µm und ⌀D=17 µm) mit einer Schichtdicke von 5 µm (Außenschicht)
wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die. Thermofixierung in seinen mechanischen Eigenschaften eingestellt werden und besaß eine mittlere Wanddicke von 41 µm.

### Referenzbeispiel 1

Handelsprodukt "K norm" (5-schichtiger biaxial verstreckter Kunststoffschlauch) der CaseTech GmbH & Co KG mit einer Wanddicke von 41 µm.

### Referenzbeispiel 2

Handelsüblicher Collagendarm mit einer Wanddicke von 130 µm.

### Prüfkriterien:

Hüllenabschnitte wurden 30 min lang gewässert, anschließend bei konstantem Fülldruck mit feinkörnigem Brühwurstbrät gefüllt und an den Enden mit Metallclips verschlossen. Dann wurden die Würste aufgehängt, in einem Brühschrank mit Raucherzeuger 30 min lang mit rauchgesättigtem Wasserdampf bei 75°C behandelt, anschließend 60 min lang mit Wasserdampf ohne Rauch bei 80°C gegart. Die Würste wurden an der Luft auf Raumtemperatur abgekühlt und dann in einem Kühlraum bei etwa 6°C gelagert. Tabelle 1 zeigt, dass das Wurstbrät in den erfindungsgemäßen Hüllen nach dem Räuchern deutlich stärker gefärbt ist und einen intensiveren Rauchgeschmack aufweist.

**Tabelle 1**

| | **VB 1** | **VB 2** | **B1** | **B2** | **B3** | **B4** | **B5** | **B6** | **RB1** | **RB2** |
|---|---|---|---|---|---|---|---|---|---|---|
| Rauchgeschmack | 5 | 2 | 2 | 2 | 1 | 1 | 1 | 3 | 6 | 1 |
| Rauchfarbe | 5 | 3 | 2 | 2 | 3 | 3 | 3 | 4 | 6 | 1 |
| Wasserdampfdurchlässigkeit (g·m⁻²·d⁻¹) | 25 | 30 | 19 | 28 | 31 | 31 | 32 | 15 | 7 | 700 |
| Sauerstoffdurchlässigkeit (ml·m⁻²·d⁻¹·bar⁻¹) | 35 | 40 | 27 | 37 | 43 | 43 | 44 | 26 | 25 | 110 |
| Gewichtsverlust | 2 | 5 | 4 | 4 | 2 | 2 | 2 | 2 | 1 | 4 |
| Schäleigenschaften | 5 | 2 | 4 | 4 | 1 | 1 | 1 | 1 | 1 | 1 |
| Zylindrizität | 5 | 2 | 5 | 5 | 2 | 2 | 2 | 2 | 2 | 2 |
| Natürl. Optik | 6 | 6 | 1 | 1 | 2 | 1 | 2 | 2 | 6 | 2 |
| Natürl. Haptik | 6 | 6 | 1 | 1 | 2 | 1 | 2 | 2 | 6 | 2. |
| Farbdeckung | 2 | 2 | 6 | 6 | 1 | 1 | 1 | 1 | 1 | 2 |
| Anschnittverhalten (heiß) | 5 | 3 | 4 | 4 | 1 | 1 | 1 | 1 | 4 | 2 |
| Weiterreißeigenschaften | 4 | 4 | 1 | 1 | 1 | 1 | 1 | 1 | 4 | 3 |
| Stippeigenschaften | 6 | 4 | 1 | 1 | 1 | 1 | 1 | 1 | 6 | 2 |
| Oberflächenstruktur | 6 | 6 | 1 | 1 | 2 | 1 | 2 | 1 | 6 | 2 |
| Kranzeigenschaften | 4 | 2 | 4 | 4 | 2 | 2 | 2 | 2 | 2 | 2 |

| | | | | | | | | | | |
|---|---|---|---|---|---|---|---|---|---|---|
| Bewertung : 1 = sehr gut 2 = gut 3 = befriedigend 4 = ausreichen 5 = mangelhaft 6 = sehr mangelhaft | | | | | | | | | | |

Die relevanten Eigenschaften der nachfolgend beschriebenen mehrschichtige nahtlose Schlauchhüllen wurden folgendermaßen ermittelt:
Rauchgeschmack: subjektives Urteil aus Verkostungstest durch eine Reihe von 4 Fachleute (Schulnotenprinzip). Das Referenzbeispiel 2 stellte dabei das bestmögliche Ergebnis 1 da.
Rauchfarbe: subjektives Urteil durch eine Reihe von 4 Fachleute als Maß für die Braunfärbung der Brätoberfläche nach dem Abschälen der Hülle (Schulnotenprinzip). Das Referenzbeispiel 2 stellte dabei das bestmögliche Ergebnis 1 da.
Wasserdampfdurchlässigkeit: nach ASTM F1249-01 bei einer Temperatur von 23°C und einer relativen Luftfeuchtigkeit von 85 %. Der Wert gibt die Menge an Wasserdampf in Gramm an, die unter den angegebenen Prüfbedingungen während eines Tages (24 Stunden) durch eine 1 m² große Fläche der zu prüfenden Hülle durchtritt.
Sauerstoffdurchlässigkeit: Die Bestimmung der 02Du erfolgt gemäß DIN 53380 Teil 3 bei einer Temperatur von 23°C und einer relativen Luftfeuchtigkeit von 75 %. Der Wert gibt das Volumen an Sauerstoff in Millilitern an, das bei einem Sauerstoff-Partialdruck von 1 bar unter den angegebenen Prüfbedingungen während eines Tages (24 Stunden) durch eine 1 m² große Fläche der zu prüfenden Hülle durchtritt.
Gewichtsverlust: Die zu prüfenden Hüllen werden mittels einer handelsüblichen Füllmaschine mit oxidationsempfindlichem Testfüllgut (Prüfbrät auf Brühwurstbasis) prall gefüllt, beidseitig durch einen Clip verschlossen. Nach dem Wiegen der erhaltenen Würste werden diese in einem Lagerraum bei Raumtemperatur gelagert. Nach Ablauf von 20 Tagen werden die Würste erneut gewogen, wobei sich der prozentuale Gewichtsverlust aus dem Verhältnis der Differenz von Gewicht vor der und nach der Lagerung zum Gewicht vor der Lagerung ergibt (Schulnotenprinzip).
Schäleigenschaften: beurteilt wurde wie leicht sich die Hülle nach dem Einschneiden abschälen ließ und wie gut das Schälverhalten (z.B. Richtungswechsel beim Schälen) war (Schulnotenprinzip).
Zylindrizität: objektives Urteil über Kaliberdifferenz zwischen dem Wurstdurchmesser oben, mitte und unten (Schulnotenprinzip)
Natürliche Optik: subjektives Urteil über den optischen Eindruck wie Faltenbildung und Konsistenz der Würste (Schulnotenprinzip)
Natürliche Haptik: subjektives Urteil über den haptischen Eindruck wie fester Griff und natürliche Oberflläche der Würste (Schulnotenprinzip)
Farbdeckung: subjektives Urteil über die Farbintensität und Farbtreue der gefüllten eingefärbten Wursthülle vor und nach dem Brühen (Schulnotenprinzip)
Anschnittverhalten (heiß): objektives Urteil über Anzahl und Länge der beim Heißanschneiden (Kerntemperatur des Bräts ca. 35°C) verursachten Risse (Schulnotenprinzip)
Weiterreißfestigkeit: Die zu prüfenden Hüllen werden mittels einer handelsüblichen Füllmaschine mit Prüfbrät auf Brühwurstbasis prall gefüllt, beidseitig durch einen Clip verschlossen. Nach dem Brühen und Kühlen werden die ca. 50 cm langen Muster halbiert und jeder Hälfte am angeschnittenen Ende in Längsrichtung ca.1cm eingeschnitten. Anschließend werden die Muster bei einer Temperatur von 70°C und einer relativen Feuchte von 30 % über mehrere Stunden warmgelagert. Die Beurteilung geschieht über die sich ausbildende Risslänge während der Lagerung.
Stippeigenschaften: objektives Urteil über die Anzahl der gerissenen oder geplatzten Würste beim Füllen oder Brühen nach Kaltstippen (Schulnotenprinzip)
Oberflächenstruktur: subjektives Urteil über die Oberflächenstruktur der Wurst (Schulnotenprinzip)
Kranzeigenschaften: objektives Urteil über die Verkranzeigenschaften (Schulnotenprinzip)

## Patentansprüche

1. Ein- oder mehrschichtige nahtlose rauchdurchlässige Schlauchhülle, **dadurch gekennzeichnet, dass** mindestens eine Schicht der Hülle ein Gemisch aus Polyamid und Naturfasern und gegebenenfalls Additive enthält, wobei die Summe der Schichtdicken zwischen 5 und 200 µm liegt und die Wasserdampfdurchlässigkeit der Hülle nach ASTM-F1249-01 bei einer Temperatur von 23°C und einer relativen Luftfeuchte von 85 % wenigstens 25 cm³/(m² x Tag x bar) beträgt.

2. Nahtlose Schlauchhülle nach Anspruch 1, **dadurch gekennzeichnet, dass** sie biaxial- oder uniaxial- oder nicht gereckt ist.

3. Nahtlose Schlauchhülle nach Anspruch 1 oder 2, **dadurch gekennzeichnet, dass** mindestens eine Schicht der Hülle aus einem Gemisch aus Naturfasern und einem Gemisch aus aliphatischem Polyamid aus der Gruppe PA6, PA11, PA12, PA66, PA6/66, PA6.8, PA6.9, PA6.10, PA6.11, PA6.12, einem Copolymer aus den darin enthaltenen Monomereinheiten oder einer Mischung der genannten aliphatischen Polyamide enthält.

4. Schlauchfolie nach Anspruch 1 oder 2, **dadurch gekennzeichnet, dass** mindestens eine Schicht der Hülle 30 - 99,9 Gew.-% eines aliphatischen Polyamids und/oder Copolyamids und/oder einer Mischung aus denselben und/oder (teil-) aromatischen PA und/oder olefinischen (Co-)Polymer aus der Gruppe (EVA, EVOH, Ionomerharz) und/oder (Co-)Polyester und 0,1 - 70 Gew.-% an Naturfasern bezogen auf das Gesamtgewicht der Schicht enthält, wobei die Gew.-%-Angaben des Polymers, Additive und der Naturfaser sich jeweils zu 100 Gew.-% ergänzen.

5. Nahtlose Schlauchhülle nach einem der Ansprüche 1 bis 4, **dadurch gekennzeichnet, dass** die Naturfasern Cellulosefasern mit einer Faserlänge im Bereich von 5 bis 10.000 *µ*m sind.

6. Nahtlose Schlauchhülle nach Anspruch 1, **dadurch gekennzeichnet, dass** die nahtlose Schlauchhülle aus mindestens 3 Schichten besteht, wobei
- die Innenschicht 30 bis 100 Gew.-% aliphatischem Polyamid aus der Gruppe PA6, PA11, PA12, PA66, PA6/66, PA6.8, PA6.9, PA6.10, PA6.11, PA6.12, einem Copolymer aus den darin enthaltenen Monomereinheiten oder einer Mischung der genannten aliphatischen Polyamide und 0 bis 70 Gew.-% Cellulosefasern und gegebenenfalls Additive,
- die Mittelschicht 30 bis 100 Gew.-% aliphatischem Polyamid aus der Gruppe PA6, PA11, PA12, PA66, PA6/66, PA6.8, PA6.9, PA6.10, PA6.11, PA6.12, einem Copolymer aus den darin enthaltenen Monomereinheiten oder einer Mischung der genannten aliphatischen Polyamide und 0 bis 70 Gew.-% Cellulosefasern und gegebenenfalls Additive und
die Außenschicht 30 bis 100 Gew.-% aliphatischem Polyamid aus der Gruppe PA6, PA11, PA12, PA66, PA6/66, PA6.8, PA6.9, PA6.10, PA6.11, PA6.12, einem Copolymer aus den darin enthaltenen Monomereinheiten oder einer Mischung der genannten aliphatischen Polyamide und 0 bis 70 Gew.-% Cellulosefasern und gegebenenfalls Additive enthält.

7. Verwendung einer nahtlose Schlauchhülle gemäß einem der Ansprüche 1 bis 6 zur Umhüllung pastöser oder flüssiger Füllgüter.

8. Verwendung nach Anspruch 7, **dadurch gekennzeichnet, dass** das pastöse Füllgut Wurstbrät ist.

## Claims

1. Single or multilayer seamless smoke-permeable tubular casing, **characterized in that** at least one layer of the casing contains a mixture of polyamide and natural fibres and if appropriate additives, the sum of the layer thicknesses being between 5 and 200 µm, and the water vapour permeability of the casing as specified by ASTM F1249-01 being at least 25 cm³/(m² × day × bar) at a temperature of 23°C and a relative air humidity of 85%.

2. Seamless tubular casing according to Claim 1, **characterized in that** it is biaxially stretched or uniaxially stretched or not stretched.

3. Seamless tubular casing according to Claim 1 or 2, **characterized in that** at least one layer of the casing contains a mixture of natural fibres and a mixture of aliphatic polyamide from the group nylon 6, nylon 11, nylon 12, nylon 66, nylon 6/66, nylon 6.8, nylon 6.9, nylon 6.10, nylon 6.11, nylon 6.12, a copolymer of the monomer units present therein, or a mixture of the said aliphatic polyamides.

4. Tubular film according to Claim 1 or 2, **characterized in that** at least one layer of the casing contains 30-99.9% by weight of an aliphatic polyamide and/or copolyamide and/or a mixture of the same and/or (partially) aromatic polyamide and/or olefinic (co)polymer from the group (EVA, EVOH, ionomer resin) and/or (co)polyester and 0.1-70% by weight of natural fibres based on the total weight of the layer, the percentages by weight of the polymer, additives and the natural fibres respectively totalling 100% by weight.

5. Seamless tubular casing according to one of Claims 1 to 4, **characterized in that** the natural fibres are cellulose fibres having a fibre length in the range from 5 to 10 000 µm.

6. Seamless tubular casing according to Claim 1, **characterized in that** the seamless tubular casing consists of at least 3 layers,
- the inner layer containing 30 to 100% by weight of aliphatic polyamide from the group nylon 6, nylon 11, nylon 12, nylon 66, nylon 6/66, nylon 6.8, nylon 6.9, nylon 6.10, nylon 6.11, nylon 6.12, a copolymer of the monomer units present therein or a mixture of the said aliphatic polyamides and 0 to 70% by weight of cellulose fibres and if appropriate additives,
- the middle layer containing 30 to 100% by weight of aliphatic polyamide from the group nylon 6, nylon 11, nylon 12, nylon 66, nylon 6/66, nylon 6.8, nylon 6.9, nylon 6.10, nylon 6.11, nylon 6.12, a copolymer of the monomer units present therein or a mixture of the said aliphatic polyamides and 0 to 70% by weight of cellulose fibres and if appropriate additives and
- the outer layer containing 30 to 100% by weight of aliphatic polyamide from the group nylon 6, nylon 11, nylon 12, nylon 66, nylon 6/66, nylon 6.8, nylon 6.9, nylon 6.10, nylon 6.11, nylon 6.12, a copolymer of the monomer units present therein or a mixture of the said aliphatic polyamides and 0 to 70% by weight of cellulose fibres and if appropriate additives.

7. Use of a seamless tubular casing according to one of Claims 1 to 6 for encasing pasty or liquid fillings.

8. Use according to Claim 7, **characterized in that** the pasty filling is sausage meat emulsion.

## Revendications

1. Enveloppe tubulaire dépourvue de jointure et perméable à la fumée, monocouche ou multicouche, **caractérisée en ce qu'**au moins une couche de l'enveloppe comprend un mélange de polyamide et de fibres naturelles et, le cas échéant, des additifs, la somme des épaisseurs de couche se situant entre 5 et 200 µm et la perméabilité à la vapeur d'eau de l'enveloppe d'après la norme ASTM F1249-01 à une température de 23°C et à une humidité de l'air relative de 85 % se situant à au moins 25 cm³/(m² x jour x bar).

2. Enveloppe tubulaire dépourvue de jointure selon la revendication 1, **caractérisée en ce qu'**elle est allongée biaxialement ou uniaxialement ou qu'elle n'est pas allongée.

3. Enveloppe tubulaire dépourvue de jointure selon la revendication 1 ou 2, **caractérisée en ce qu'**au moins une couche d'enveloppe comprend un mélange constitué de fibres naturelles et un mélange constitué de polyamide aliphatique provenant du groupe PA6, PA11, PA12, PA66, PA6/66, PA6.8, PA6.9, PA6.10, PA6.11, PA6.12, un copolymère constitué des unités monomères les contenant ou un mélange des polyamides aliphatiques cités.

4. Feuille tubulaire selon la revendication 1 ou 2, **caractérisée en ce qu'**au moins une couche de l'enveloppe comprend 30 à 99,9 % en poids d'un polyamide et/ou copolyamide aliphatique et/ou d'un mélange des mêmes PA et/ou PA (partiellement) aromatiques et/ou (co)polymères oléfiniques provenant du groupe (EVA, EVOH, résine de ionomère) et/ou (co)polyesters et 0,1 à 70 % en poids de fibres naturelles par rapport au poids total de la couche, les indications en % en poids du polymère, des additifs et des fibres naturelles se complétant respectivement pour faire 100 %.

5. Enveloppe tubulaire dépourvue de jointure selon l'une des revendications 1 à 4, **caractérisée en ce que** les fibres naturelles sont des fibres cellulosiques ayant une longueur de fibres dans la plage allant de 5 à 10 000 µm.

6. Enveloppe tubulaire dépourvue de jointure selon la revendication 1, **caractérisée en ce que** l'enveloppe tubulaire dépourvue de jointure se compose d'au moins 3 couches, où
- la couche interne comprend 30 à 100 % en poids de polyamide aliphatique provenant du groupe PA6, PA11, PA12, PA66, PA6/66, PA6.8, PA6.9, PA6.10, PA6.11, PA6.12, d'un copolymère constitué des unités monomères les contenant ou d'un mélange des polyamides aliphatiques cités et 0 à 70 % en poids de fibres de cellulose et, le cas échéant, des additifs,
- la couche médiane comprend 30 à 100 % en poids de polyamide aliphatique provenant du groupe PA6, PA11, PA12, PA66, PA6/66, PA6.8, PA6.9, PA6.10, PA6.11, PA6.12, d'un copolymère constitué des unités monomères les contenant ou d'un mélange des polyamides aliphatiques cités et 0 à 70 % en poids de fibres de cellulose et, le cas échéant, des additifs,
- la couche externe comprend 30 à 100 % en poids de polyamide aliphatique provenant du groupe PA6, PA11, PA12, PA66, PA6/66, PA6.8, PA6.9, PA6.10, PA6.11, PA6.12, d'un copolymère constitué des unités monomères les contenant ou d'un mélange des polyamides aliphatiques cités et 0 à 70 % en poids de fibres de cellulose et, le cas échéant, des additifs.

7. Utilisation d'une enveloppe tubulaire dépourvue de jointure selon une des revendications 1 à 6 pour envelopper des denrées de remplissage pâteuses ou liquides.

8. Utilisation selon la revendication 7, **caractérisée en ce que** la denrée de remplissage pâteuse est de la chair à saucisse.
